# EUROPEAN PATENT APPLICATION

(11) **EP 2 749 360 A1**
(43) Date of publication of application: **02.07.2014**
(21) Application number: 12825884.5
(22) Date of filing: 22.08.2012
(51) Int. Cl.: B07B 1/20, B07B 9/00, B09B 3/00, B09B 5/00

(54) **SYSTEM WITH SEPARATING UNIT**

(30) Priority: 22.08.2011 JP 2011180324; 29.08.2011 JP 2011185623
(71) Applicant: Kyoritsu Industry Co. Ltd., Kanagawa 252-0132 (JP); Kyoritsu Co. Ltd., Kanagawa 252-0131 (JP)
(72) Inventor: UENO, Hiroakira, Sagamihara-shi Kanagawa 252-0132 (JP); OBARA, Katsuro, Sagamihara-shi Kanagawa 252-0132 (JP)
(74) Representative: Körber, Martin Hans
(86) International application number: PCT/JP2012/005270
(87) International publication number: WO 2013/027402

(57) **Abstract**

There is provided a system including a separating unit that separates foreign matter including packaging from material to be processed. The separating unit includes: rotating vanes that agitate the material to be processed in an up-down direction inside a housing; an inlet that passes into the housing; a discharge outlet that discharges the foreign matter from inside the housing; a driving unit that rotationally drives the rotating vanes; a supplying unit that supplies the material to be processed into the housing via the inlet; and a control unit that controls the timing of inputting of the material to be processed into the housing by the supplying unit so as to limit an increase in driving torque of the rotating vanes.

## Description

### TECHNICAL FIELD

The present invention relates to a system including a unit that separates foreign matter, which includes packaging material, from material to be processed.

### BACKGROUND ART

In Japanese Laid-Open Patent Publication No. 2001-25754 (Japanese Patent No. 4,005,272), the applicant of the present application discloses a system that separates waste material wrapped in packaging into the waste material and the packaging material and also dehydrates the waste material to reduce the volume and weight. Such system includes: a centrifugal sorter where a lower part of an outer circumferential surface of a drum is formed as a mesh, an inlet port is provided on one end surface of the drum and a discharge port for discharging the packaging is provided on the other end surface, a rotational shaft on which a plurality of agitating plates are radially erected is inserted through the inside, and a plurality of flow directing plates that guide the packaging toward the discharge port are provided so as to protrude from a ceiling portion with rupturing portions for rupturing the packaging; and a dehydration processing apparatus including a screw conveyor for conveying the waste material separated by the centrifugal sorter, wherein an opening adjusting mechanism capable of adjusting the size of an opening is provided at a conveying outlet of the screw conveyor.

This system is suited to sorting when food waste produced by homes and/or food residue discharged from a food processing plant is inputted while still being held within packaging, such as garbage bags. In this system, the dropped garbage bags are cut or torn up, the contents of such bags are crushed or the like and the crushed contents are then sieved and removed, with foreign matter such as fragments and the like of the garbage bags being discharged from a separate discharge outlet. Accordingly, it is possible to provide a system that separates waste material, which includes a variety of materials such as food waste and containers, as material to be processed so as to recover (recycle) such materials as resources.

### DISCLOSURE OF THE INVENTION

Among systems including a separating or sorting unit, there is demand for a system capable of being continuously driven more efficiently.

One aspect of the present invention is a system including a separating unit that separates foreign matter including packaging from material to be processed. The separating unit includes: rotating vanes that agitate the material to be processed in an up-down direction inside a housing; an inlet that passes into the housing; a discharge outlet that discharges the foreign matter from inside the housing; a driving unit that rotationally drives the rotating vanes; a supplying unit that supplies the material to be processed into the housing via the inlet; and a control unit that controls the timing of inputting (timing of loading, supplying) of the material to be processed into the housing by the supplying unit so as to limit an increase in driving torque of the rotating vanes.

To increase the efficiency of sorting that uses the centrifugal force of rotating vanes, it is necessary to set the rotational speed fairly high. When separating waste material as the material to be processing including packaging material such as garbage bags, it is desirable to maintain a rotational speed of around 400 to 1000 rpm for the rotating vanes, with a rotational speed of 500 to 900 rpm being more preferable. When separating waste material that mainly includes food residue, it is desirable to rotate the rotating vanes at an even higher rotational speed, for example around 1000 to 2000 rpm, with a rotational speed of around 1000 to 1600 rpm being more preferable. On the other hand, if a large amount of material to be processed is inputted when the rotating vanes are rotating at high speed, the rotation of the rotating vanes is susceptible to becoming unstable, which is a cause of vibration and noise and makes it difficult to maintain the rotational speed. Even if the loaded amount of the material to be processed is controlled, if the waste material is wrapped in packaging, it is only possible to control the amount in units of the packaging. Separate equipment for destroying the packaging before processing becomes necessary, which causes an increase in the equipment cost and running cost.

With this separating unit, the control unit controls the timing at which the material to be processed is inputted so as to limit an increase in driving torque of the rotating vanes. By monitoring the driving torque of the rotating vanes using an appropriate method and preventing the driving torque from becoming excessive, it is possible to prevent the rotation of the rotating vanes from becoming unstable. As one example, it is possible to monitor the driving torque of the rotating vanes by monitoring the current consumed by the driving unit. In addition, by controlling the timing of inputting of the material to be processed, it is possible to control the amount of material to be processed present in the housing in a state where the material is wrapped in packaging, the material warped in packaging being susceptible to acting as a load on the rotating vanes. Accordingly, by preventing to the load on the rotating vanes from becoming excessively large, it is possible to provide a separating unit that can stably maintain the rotational speed of the rotating vanes and is capable of efficiently and stably sorting and separating foreign matter. Also, since a large driving unit capable of an excessive torque becomes unnecessary, it is possible to provide a separating unit at low cost and with low power consumption.

It is desirable for the supplying unit to include a first gate that opens and closes the inlet, and for the control unit to include a function (gate control unit) of controlling a degree of opening of the first gate, based on the driving torque of the rotating vanes when the first gate is at an intermediate degree of opening. By opening the first gate when the driving torque is below a predetermined value, the control unit is capable of controlling the input timing of the material to be processed so as to limit an increase in the driving torque of the rotating vanes. In addition, by monitoring the rotating vanes when the first gate has an intermediate degree of opening and controlling the degree of opening, it is possible to more precisely control the input timing of the material to be processed during the loading interval of the material to be processed. This means that it is possible to control the driving torque of the rotating vanes 10 even more precisely and suppress an increase in the size of the driving unit.

It is desirable for the control unit to include a function (temporarily stopping function unit) of temporarily stopping the first gate at an intermediate degree of opening. It is also effective for the control unit to include a function (opening/closing repeating functional unit) that temporarily stops the first gate at an intermediate degree of opening, then temporarily closes the first gate according to a condition, such as whether the driving torque of the rotating vanes has continued to increase, and subsequently reopens the first gate after a drop in the driving torque.

It is desirable for the supplying unit to include a second gate which together with the first gate forms a holding region for the material to be processed, and for the control unit to include a function (collaboration control functional unit) of controlling the first gate and the second gate to produce a state where at least one of the first gate and the second gate is closed. It is possible to suppress situations where the material to be processed being separated is blown back outside from inside the housing.

It is desirable, when the system further includes: a first tank that stores a fluidized material separated from the material to be processed by the separating unit; and a pneumatic feeding unit that intermittently pneumatically transports the fluidized material from the first tank via a pressurizing tank, for the control unit to include a function of controlling timing of inputting of the material to be processed into the housing so as to limit an increase in a level of the first tank. By controlling the timing for introducing the material to be processed, it is possible to control the amount of the material to be processed discharged from the separating unit and possible to adjust the level of the first tank.

It is desirable for the rotating vanes to include: a plurality of blades (plates) that are respectively attached to ends in a direction of rotation of edges of a rotational shaft, the rotational shaft has a polygonal cross section, so as to be substantially perpendicular to each edge; pressing portions where front ends of the plurality of plates extend backward to the direction of rotation in substantially an L shape and sandwich the material to be processed against at least part of an inner wall of the housing to cause deformation of the material to be processed; and a plurality of ribs that connect the pressing portions of the respective blades and the edges of the rotational shaft along rear surfaces of each blade to the direction of rotation of the plates, the ribs being disposed at intervals along the rotational shaft.

By sandwiching and pressing the material to be processed between the pressing portions that extend backward to the direction of rotation and part of the inner wall of the housing, it is possible to promote separation of the foreign matter by destroying the packaging included in the material to be processed and pressing fluidized material out of the packaging, and at the same time to prevent the packaging from becoming caught on the pressing portions. In addition, by reinforcing the pressing portions with ribs that extend from the rotational shaft to the pressing portions, it is possible to suppress deformation of the pressing portions together with the plates. Accordingly, it is possible to rotate the rotating vanes at high speed in a stable state.

It is desirable for the intervals of the plurality of ribs to be narrower on an inlet side than on a discharge side. By making the intervals narrower on the inlet side, it is possible to suppress deformation of the blades (plates) and the pressing portions on the inlet side where the load is greater, and by making the interval wider on the discharge side, it is possible to reduce the moment of inertia. Accordingly, it is possible to stably rotate the rotating vanes at higher speed.

It is also desirable for a first opening of the housing that is connected to the discharge outlet to include an opening that extends from a position that corresponds to upper ends of the rotating vanes to below the rotational shaft. It is possible to suppress resin sheets, films and their fragments and the like thereof included in the material to be processed from building up at and finally blocking the discharge outlet.

In addition, it is desirable for the housing to include support plates at both ends and a barrel portion that is supported on the support plates at both ends, and for the support plates at both ends to rotatably support the rotational shaft of the rotating vanes. By supporting the barrel portion and the rotating vanes that rotate inside the barrel portion together via the support plates at both ends on a support structure made of a steel frame or the like, it is possible to suppress deformation of the barrel portion, to make it easier to keep the clearance between the trunk portion and the rotating vanes constant, and to reduce the clearance. Accordingly, it is possible to provide a separating unit with favorable sorting efficiency.

It is desirable for the separating unit to include a perforated member that is disposed along a lower side of a rotation region of the rotating vanes and selectively allows the fluid or fluidized material to pass through, and for the barrel portion to include a second opening that opens and closes and has a size that enables at least part of the perforated member to be replaced. It is possible to provide a separation unit where it is easy to replace the perforated member, easy to change the hole diameter of the perforated member, and easy to cope with changes in the quality of the inputted material to be processed or in the required specification or the like for recycling the fluid material.

Such system may further include a dehydrating unit that carries out a process of heating and dehydrating the fluidized material while agitating the fluidized material after the fluidized material is separated from the material to be processed by the separating unit. Another aspect of the present invention is a control method of a system that includes a separating unit that separates and discharges foreign matter including packaging from material to be processed. The separating unit includes: rotating vanes that agitate the material to be processed in an up-down direction inside a housing; an inlet that passes into the housing; and a driving unit that rotationally drives the rotating vanes, and the control method includes the following step. 1. Controlling the timing of inputting of the material to be processed into the housing so as to limit an increase in driving torque of the rotating vanes.

It is effective for controlling the timing to include controlling a degree of opening of a first gate, based on the driving torque of the rotating vanes when the first gate is at an intermediate degree of opening. If the separating unit includes a second gate, it is effective for the control method to further include controlling the first gate and the second gate to produce a state where at least one of the first gate and the second gate is closed.

In addition, if the system includes: a first tank that stores a fluid or fluidized material separated from the material to be processed by the separating unit; and a pneumatic feeding unit that intermittently pumps the fluid material from the first tank via a pressurizing tank, it is effective for the control method to further include controlling timing of inputting of the material to be processed into the housing so as to limit an increase in a level of the first tank.

The control method can be provided as a program (program product) that runs on a computer equipped with hardware resources such as a CPU and memory by being recorded on a recording medium such as a CD-ROM or via a computer network such as the Internet.

### BRIEF DESCRIPTION OF THE DRAWINGS

FIG. 1 is a block diagram showing a waste material processing system.
FIG. 2 is a view showing the outline of a separating apparatus.
FIG. 3 is a front view of the separating apparatus.
FIG. 4 is a rear view of the separating apparatus.
FIG. 5 is a cross-sectional view showing the construction of a central of the separating apparatus.
FIG. 6 is a side view of the separating apparatus.
FIG. 7 is a see-through view of the separating apparatus from above.
FIG. 8 shows the overall construction of rotating vanes.
FIG. 9 is a flowchart showing an overview of a method controlling a supplying unit using a control unit.
FIG. 10 shows one example of timing for changing the driving torque of the rotating vanes and inputting material to be processed.
FIG. 11 shows a state where preparations for the separating apparatus receiving the material to be processed have been made.
FIG. 12 shows how the material to be processed is received.
FIG. 13 shows how the material to be processed has been received in the holding region.
FIG. 14 shows how the material to be processed is input.
FIG. 15 shows how the material to be processed is separated.
FIG. 16 shows a state where the degree of opening of a first gate has been increased.
FIG. 17 shows a state where all of the material to be processed has been introduced.
FIG. 18 shows a state where processing of the material to be processed has ended.
FIG. 19 is a flowchart showing an overview of the method of controlling a volumetric pneumatic feeding apparatus using a control unit.
FIG. 20(a) shows a state where separated material is supplied to the volumetric pneumatic feeding apparatus and FIG. 20(b) shows a state where the separated material is pumped from the volumetric pneumatic feeding apparatus.
FIG. 21 is a side view in a state where part of a side wall of a dehydrating apparatus has been removed.
FIG. 22 is a cross-sectional view in a horizontal direction of the dehydrating apparatus.
FIG. 23 shows the operation of the dehydrating apparatus, with FIG. 23(a) showing an initial stage, FIG. 23(b) showing an intermediate stage, and FIG. 23(c) showing a final stage.

### DETAIL DESCRIPTION

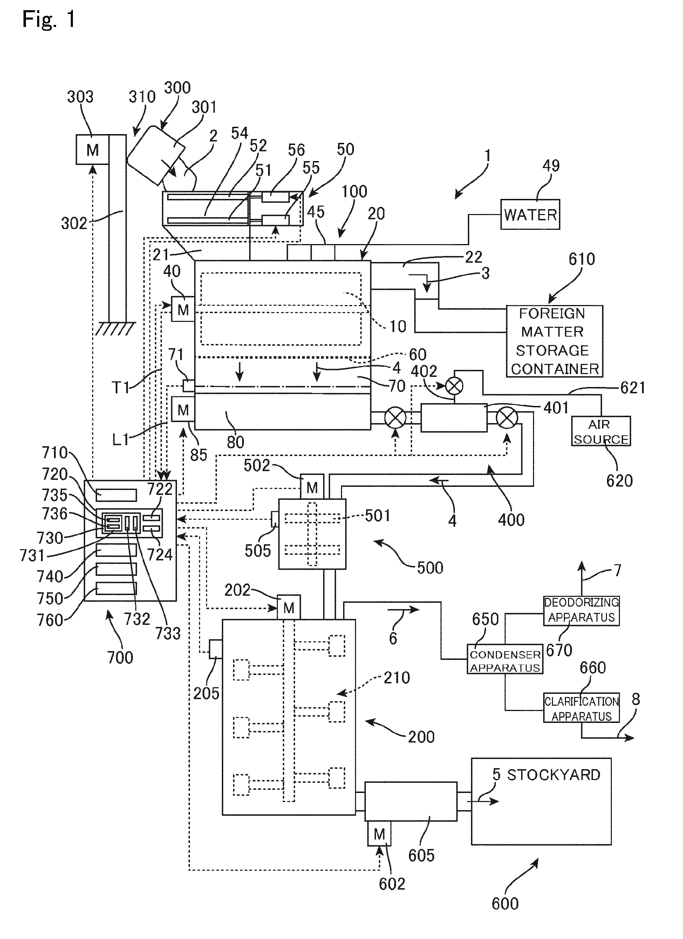

FIG. 1 is a block diagram of a waste material processing system. This waste material processing system (processing system) 1 includes a separating apparatus (or "separating unit", "sorting apparatus", "selecting apparatus", "destroying/sorting apparatus") 100 that separates (sorts) material to be processed (processing object) 2 into foreign matter 3 and material ("separated material") 4 that has been separated and is in the form of a fluid or fluidized, a dehydrating apparatus (or "drying unit") 200 that dehydrates or dries the separated material 4 to convert the separated material 4 into recycled material (or "dried material") such as compost, and a control apparatus (or "control unit 700") that controls such apparatuses. A typical control unit 700 is a computer including hardware resources such as a CPU and memory and the control method described below can be provided as a program (program product).

As examples, the material to be processed 2 is household waste that has been bagged or food waste discharged from a food processing plant. In addition to organic waste material, such as food waste that is to be recycled, the material to be processed 2 includes packaging, for example garbage bags made of sheets or films of synthetic resin, recycling bags, trays, packs, cloth scraps, string, plates, chopsticks, and the like. As one example, when the material to be processed 2 is homogenous food residue such as okara (soy pulp), if the separated material 4 is dried, such waste can be recycled as high-quality, homogenous fertilizer. Even if various food residues are mixed, if the contents are known in advance, it is possible to reuse the waste as high-quality fertilizer according to a certain procedure. When it is not possible to reuse the separated material 4, by drying and reducing the weight, it becomes comparatively easy to dispose of the waste.

The processing system 1 further includes a conveying apparatus (supplying apparatus) 300 that conveys the material to be processed 2 from a storage location or a collection location to the separating unit 100. The conveying apparatus 300 may be an inversion lift 310 including a waste container 301, rails 302, and a motor 303, may be another conveying apparatus such as a belt conveyor, or may be a combination of a plurality of conveying apparatuses. By switching the conveying apparatus 300 on and off and controlling the conveying speed, a conveying control unit 710 of the control unit 700 is capable of controlling the supplying amount of material to be processed 2 supplied to the separating unit 100.

The separating apparatus 100 crushes and agitates the material to be processed 2 conveyed by the conveying apparatus 300 to separate the separated material 4, which is in the form of a fluid, and the foreign matter 3 that includes packaging and other material and stores the separated material 4 in a tank (first tank) 70 below the separating apparatus 100. The foreign matter 3 is discharged from the discharge outlet 22 and is stored in a foreign matter storage container 610.

The processing system 1 further includes a volumetric pneumatic feeding apparatus (fixed amount pneumatic transporting system) 400 and a measuring tank 500. The separated material 4 stored in the first tank 70 is fed to the volumetric pneumatic transporting apparatus 400 by a screw conveyor 80 provided below the first tank 70. The volumetric pneumatic feeding apparatus 400 includes a pressurizing tank 401 that receives a fixed volume (amount) of the separated material 4 and a pressurizing line 402 that supplies compressed air (pressurized air) 621 obtained from an appropriate air source 620 composed of a compressor or the like to the pressurizing tank 401, and pumps a fixed amount of the separated material 4 to the measuring tank 500 downstream (for post-processing).

The measuring tank 500 has a capacity for storing an amount of separated material 4 that is batch processed by the dehydrating apparatus 200 in a single operation, and receives the separated material 4 pumped by the volumetric pneumatic feeding apparatus 400 divided in several parts. The measuring tank 500 includes an agitating apparatus 501 and a motor 502 that drives the agitating apparatus 501. The separated material 4 is sent from the measuring tank 500 to the dehydrating apparatus 200 and the separated material 4 that has been heated and dried while being agitated by an agitating unit 210 installed inside the dehydrating apparatus 200 is turned into recyclable material (processed material) 5 that has been processed and is conveyed to by a screw feeder 605 to a stockyard 600. This system 1 is capable of industrially, continuously, and automatically carrying out a process that separates the material to be processed 2 into the fluid or fluidized material (or "recyclable material", "organic waste material", "recoverable material") 4 and the remaining foreign matter 3, and then dries the fluidized material 4 to recycle the fluidized material 4 as compost, animal feed, or the like.

The processing system 1 further includes a condenser apparatus 650 that receives and cools steam (exhaust air) 6 that has been separated from the separated material 4 during operation of the dehydrating apparatus 200, a clarification apparatus 660 that purifies the water discharged from the condenser apparatus 650 and discharges the water as waste water 8, and a deodorizing apparatus 670 that deodorizes the exhaust gas from the condenser apparatus 650 after removal of the moisture and discharges such gas as the gas 7.

The separating apparatus 100 is a foreign matter sorting and separating apparatus that removes the foreign matter 3, such as packaging material that is difficult to recycle, from the material to be processed 2 that includes the recyclable organic waste material 4, and includes: a housing (main drum) 20 that incorporates rotating vanes 10 that agitate the material to be processed 2 in the up-down direction, an inlet (hopper) 21 that passes into the housing 20; a discharge outlet (foreign matter discharge outlet) 22 that discharges the separated foreign matter 3 from inside the housing 20; a driving motor (driving unit) 40 that rotationally drives the rotating vanes 10; a supplying unit 50 that supplies the material to be processed 2 into the housing 20 via the inlet 21; and a perforated member (or "filter", "screen", "sieve plate") 60 that is disposed below the rotating vanes 10 and filters the separated material 4 that is in a fluidized state (such as a slurry, sludge, or mud, hereinafter mainly referred to as a "slurry"). Below the perforated member (porous member, multi-holed member) 60 of the housing 20 is the storage tank (first tank) 70 for the separated material 4, and the separated material 4 that has been temporarily stored in the storage tank 70 is sent by the screw conveyor 80 disposed below the storage tank 70 to the volumetric pneumatic feeding apparatus 400.

A spraying apparatus 45 is provided inside the housing 20 so that water supplied from an appropriate water source 49, such as a public water supply, is introduced into the housing 20. The water inputted by the spraying apparatus 45 is used to adjust the moisture content (water ratio) of the separated material 4 and to wash the inside of the housing 20.

In addition to the conveying control unit 710, the control unit 700 includes a separation control unit 720 that monitors and controls the operation of the separating apparatus 100, a pneumatic transporting control unit (pneumatic feeding control mechanism) 740 that controls the volumetric pneumatic pumping apparatus 400, a measuring tank control unit 750 that monitors and controls the operation of the measuring tank 500, and a dehydrating control unit 760 that monitors and controls the operation of the dehydrating apparatus 200. The measuring tank control unit 750 includes on/off control of the agitating motor 502 and monitoring of temperature using a thermometer 505 attached to the measuring tank 500. The dehydrating control unit 760 includes on/off control of an agitating motor (driving motor) 202, monitoring of temperature using a thermometer 205 attached to the dehydrating apparatus 200, and on/off control of a driving motor 602 of the screw feeder 605.

The separation control unit 720 includes a gate control unit 730 that controls the supplying unit 50 attached to the inlet 21, a rotation control unit 722 that switches the driving motor 40 that rotationally drives the rotating vanes 10 on and off and monitors the driving torque T1 of the rotating vanes 10 via the driving current of the driving motor 40, and a discharging control unit 724 that detects an accumulation level L1 of the separated material 4 inside the storage tank 70 via a level meter 71 provided in the storage tank 70 and controls a driving motor 85 of the screw conveyor 80.

The supplying unit 50 attached to the inlet 21 of the housing 20 includes a first gate (or "inner gate") 51 that opens and closes the inlet 21, a first actuator (or "first driving apparatus") 55 that operates the first gate 51, a second gate (or "outer gate") 52 that is disposed outside the first gate 51 and together with the first gate 51 forms a holding region (or "holding portion", "temporary storage area") 54 for the material to be processed 2, and a second actuator (or "second driving apparatus") 56 that operates the second gate 52. The gate control unit (or "gate control function") 730 includes a first gate control unit (or "first gate control function") 731 that controls the degree of opening of the first gate 51, a second gate control unit (or "second gate control function") 732 that controls the degree of opening of the second gate 52, and a collaboration control unit (or "coordinated control function") 733 that carries out collaborated control of the first gate 51 and the second gate 52. The collaborated control unit 733 controls the first gate 51 and the second gate 52 so that at least one of the first gate 51 and the second gate 52 is in a closed state.

The first gate control unit 731 controls the degree of opening of the first gate 51 to control the timing of inputting of the material to be processed 2 into the housing 20 by the supplying unit 50 so as to limit an increase in the driving torque T1 of the rotating vanes 10. To do so, the first gate control unit 731 includes a temporary stopping function 735 that opens the first gate 51 if the driving torque T1 is below a predetermined value, temporarily stops at intermediate degrees of opening (in the present embodiment, 1/3 open and 2/3 open) and after that fully opens the first gate 51, and an opening/closing repeating function 736 that temporarily closes the first gate 51 if the driving torque T1 is larger than the predetermined value after stopping at an intermediate degree of opening and then checks for a drop in the driving torque T1.

The temporary stopping function 735 further includes a function that checks the level L1 in the storage tank 70 and opens the first gate 51 to an intermediate degree of opening if the level L1 is below a predetermined value and temporarily closes the first gate 51 if the level L1 becomes larger than a predetermined value with the first gate 51 at an intermediate degree of opening. Accordingly, the first gate control unit 731 controls the first gate 51 to control the timing at which the material to be processed 2 is loaded into the housing 20 so as to limit an increase in the level L1 of the storage tank (first tank) 70.

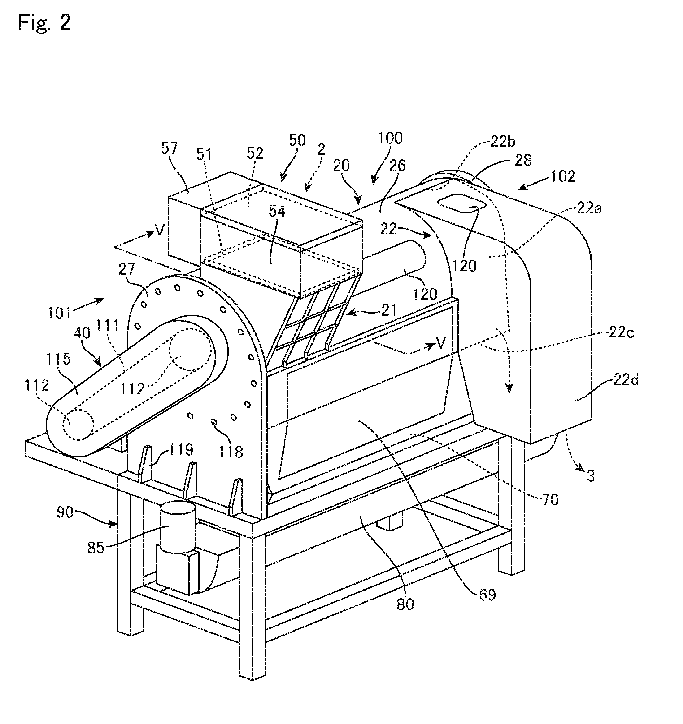

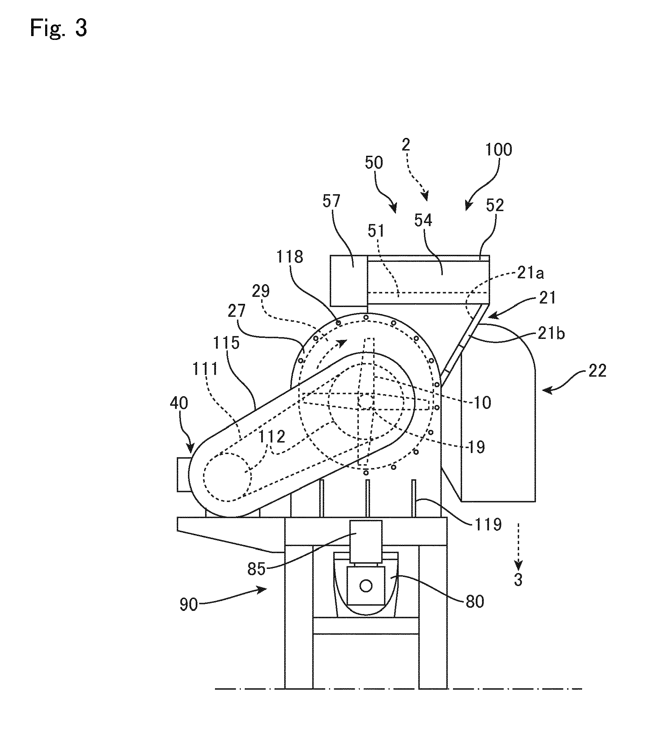

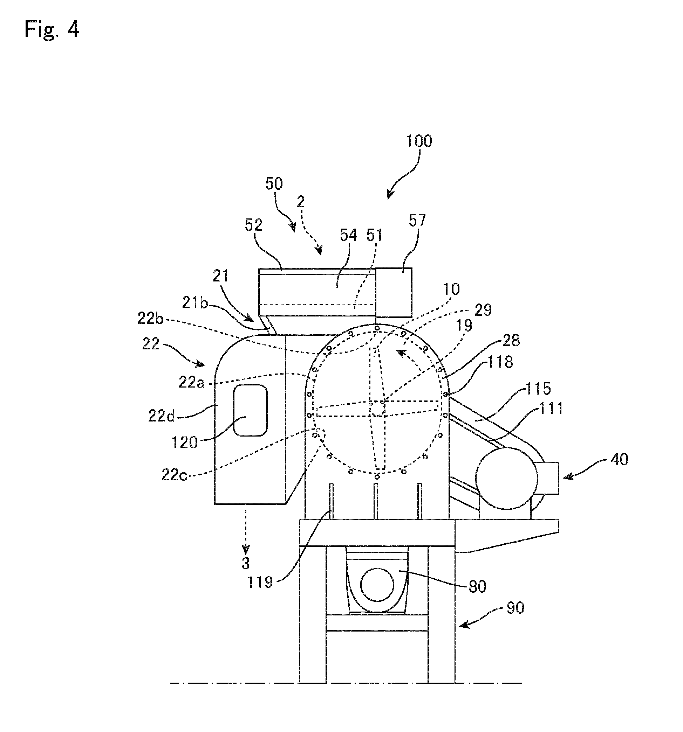

FIG. 2 shows the external appearance of the separating apparatus (separating unit) 100. FIG. 3 shows the separating apparatus 100 when looking from a front side (inlet side) 101. FIG. 4 shows the separating apparatus 100 when looking from a rear side (discharge side, outlet side) 102. The separating apparatus 100 includes the housing 20 that has a cylindrical separation area (a cylindrical space) 29 that extends in the horizontal direction and inside which the rotating vanes 10 revolve, and a support base 90 that supports the housing 20 on the ground or on some other structure. The support base 90 is constructed of a steel frame or the like. The housing 20 includes support plates 27 and 28 formed at both ends on the inlet side 101 and the discharge side (discharge outlet side) 102 and a barrel portion 26 that is supported by such support plates 27 and 28.

The support plates 27 and 28 are reinforced by ribs 119 or the like and are mounted on the support base 90 so as to be vertical (perpendicular). The barrel portion 26 is attached to the support plates 27 and 28 by bolts 118 or the like so that the sealed separation area 29 is constructed by the support plates 27 and 28 and the barrel portion 26. The support plates 27 and 28 also function so as to rotatably support the rotating vanes 10 via bearings. The motor (driving unit) 40 that rotationally drives the rotating vanes 10 is also mounted on the inlet side 101 of the support base 90 and the rotating vanes 10 are driven via a belt 111 and a pulley 112 those mechanisms are covered by a cover 115.

The separating apparatus 100 further includes the inlet 21 that extends upward from the barrel portion 26 on the inlet side 101 of the barrel portion 26 and the discharge outlet 22 that extends to the side from the barrel portion 26 on the discharge side 102 of the barrel portion 26. The inlet 21 is provided so as to extend outward at an angle from the barrel portion 26 from a position that is off-center in the direction of rotation of the rotating vanes 10 with respect to a rotational shaft 19 of the rotating vanes 10 shown by the broken lines in FIGS. 3 and 4. A rear side of an inclined surface 21a part of the inlet 21 that extends at an angle is reinforced by ribs 21b so as to withstand the impact of the material to be processed 2 being introduced. Most of the material to be processed 2 inputted into the inlet 21 will slide along the inclined surface 21a so as to be guided to the sorting area 29 inside the housing 20 and is pulled into the sorting area (separation area) 29 by the rotating vanes 10. Accordingly, there is little backflow (blowing out) of the material to be processed 2 from the inlet 21.

The supplying unit 50 is mounted above the inlet 21. The supplying unit 50 includes the first gate 51, the second gate 52, the holding region 54 provided between such gates, and a machine chamber (machine room) 57 in which an actuator is housed.

An opening 22a of the barrel portion 26 at the discharge outlet 22 has an upper end 22b provided at an upper end of the separation area 29 of the barrel portion 26 and a lower end 22c provided below the rotational shaft 19 of the rotating vanes 10 of the barrel portion 26. The discharge outlet 22 includes a duct 22d that extends in an L shape below and to the side from the opening 22a and the foreign matter 3 discharged from the opening 22a is discharged downward along the duct 22d and collected in the foreign matter storage container 610. By shifting the lower end 22c of the opening 22a in the barrel portion 26 below the rotational shaft 19, for example by 20 to 40° in angle from a position that is horizontal with the rotational shaft 19, it is possible to suppress the accumulation of synthetic resin sheets and/films (a large amount of which is included in the foreign matter 3) at the lower end 22c of the opening 22a. Accordingly, it is possible to reduce the frequency of maintenance and to save on running costs. Note that a number of monitoring windows 120 that are covered with a transparent resin material are provided on the housing 20.

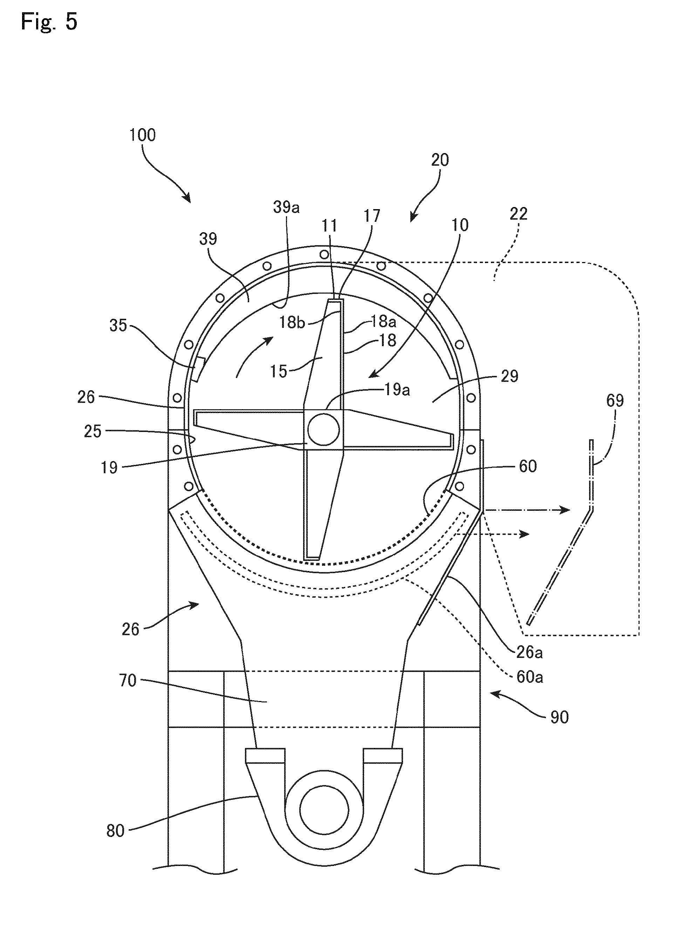

FIG. 5 shows, by way of a cross-sectional view, the construction in a substantially central periphery of the barrel portion 26 of the housing 20. Substantially the lower half circle of the cylindrical separation area 29, or more specifically a part of cylindrical part in a range of circular arc that extends by 120 to 170° at the bottom is formed as a filter 60 composed of punching metal or the like with multiple holes. The barrel portion 26 extends with a cross section in substantially the form of an inverse triangle below the cylindrical separation area 29, with the screw conveyor 80 connected to the lower end of the barrel portion 26. The lower half of the barrel portion 26 forms the storage tank 70 where the separated material 4 in the form of slurry temporarily accumulates.

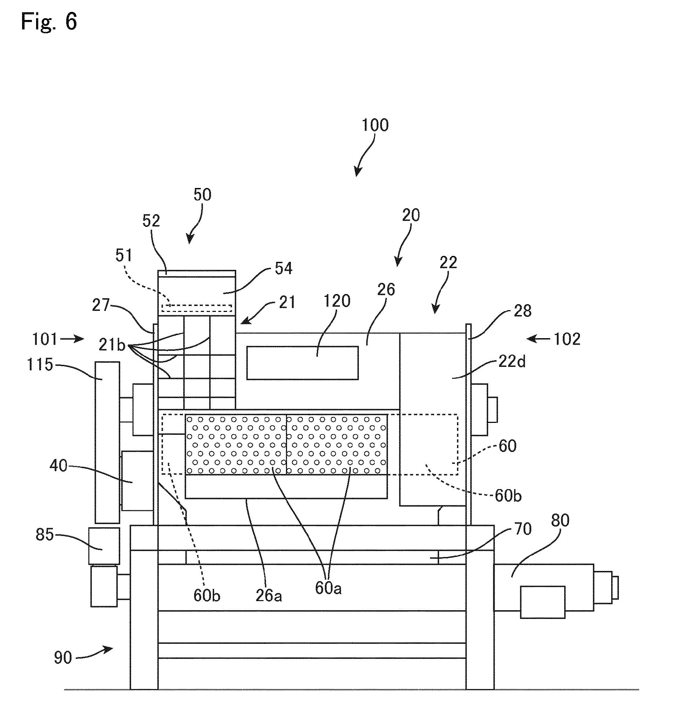

Part 26a of the barrel portion 26 that makes the side wall of the filter 60, forms a detachable cover 69. As shown in FIG. 6, it is possible to access the center part 60a of the filter 60 that extends in the length direction (horizontal direction) of the barrel portion 26 from the opening 26a in the barrel portion 26 once the cover 69 has been removed. It is possible to replace the center part 60a that is part of the filter 60, so that it is simple to substitute a filter 60 of a different mesh (hole diameter). It is possible to give the filters 60b at both ends of the filter 60 a standard hole diameter and to change the setting of the hole diameter of the center part 60a of the filter in accordance with the type and/or amount of organic waste material 4 included in the inputted material to be processed 2.

A plurality of arc-shaped guide vanes (or "flow directing plates", "arc-shaped plates") 39 that move foreign matter 3 that has been stirred up (thrown up) by the rotating vanes 10 from the inlet 21 toward the discharge outlet 22 are attached to a rear surface of the barrel portion 26 of the housing 20 in an upper half of the cylindrical separation area 29, or more specifically a part that extends by 120 to 170° at the top. A lower end 39a of each guide vane 39 is an arc-shaped edge and front ends 11 of the rotating vanes 10 rotate along such lower ends 39a of the guide vanes 39.

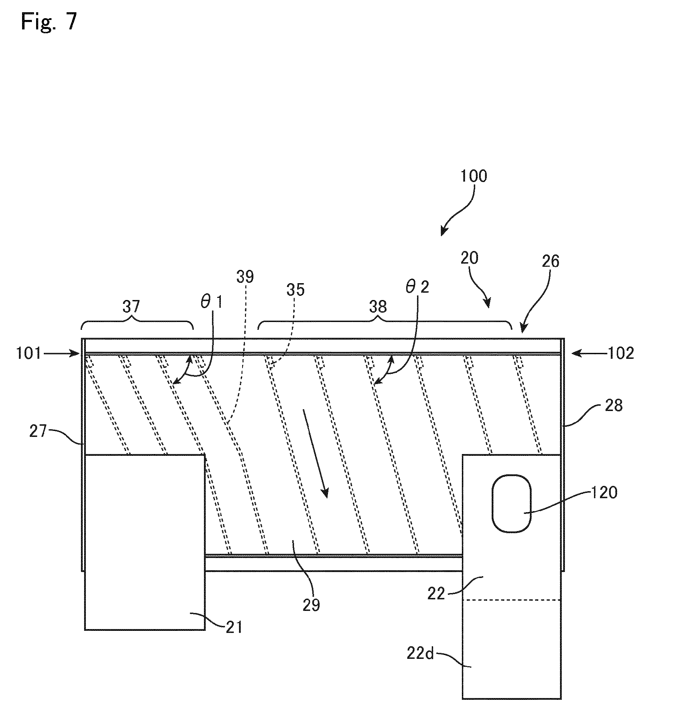

FIG. 7 shows the layout of the guide vanes 39 inside the barrel portion 26 when looking from above and through the barrel portion 26. The plurality of guide vanes 39 are disposed at an angle at the top of the separation area 29. In the present embodiment, the rotating vanes 10 rotate clockwise when looking from the input side 101. For this reason, the respective guide vanes 39 are inclined in the clockwise direction (when looking from the inlet side 101) from the input side 101 toward the discharge side 102. Airflows generated inside the separation area 29 by the centrifugal force of the rotating vanes 10, the foreign matter 3 stirred up by the rotating vanes 10, and the material to be processed 2 before sorting are directed by the guide vanes 39 from the inlet side 101 to the discharge side 102.

The guide vanes 39 are laid out so as to avoid the inlet 21 and the discharge outlet 22. Out of the guide vanes 39, the angle of inclination (the angle with respect to the inner wall of the housing or the rotational shaft of the rotating vanes 10) θ1 of the guide vanes 39 of a first group 37 disposed on the inlet side 101 is an acute angle that is smaller than the angle of inclinationθ2 of the guide vanes 39 of a second group 38 disposed in the center or on the discharge side 102. The inclination of the guide vanes 39 in the first group 37 is large, for example, the angle of inclination θ1 is 60 to 70°, and by doing so, the material to be processed 2 introduced from the inlet 21 is moved in a short time from the periphery of the inlet 21 to the center of the barrel portion 26, which makes it possible to suppress blowing out of the material to be processed 2 and/or the foreign matter 3 from the inlet 21. The inclination of the guide vanes 39 in the second group 38 is smaller, for example, the angle of inclination θ2 is 70 to 80°, and by doing so, the material to be processed 2 can be kept in the separation area 29 for sufficient time, which makes it possible to improve the efficiency for sorting and separating the foreign matter 3 and the separated material 4.

Protrusions 35 used for crushing are attached to the ends, that is, the left ends when looking from the inlet side 101, of the respective guide vanes 39 that the material to be processed (processing material) 2 strikes first. The protrusions 35 used for crushing are shaped as hooks that project somewhat sharply downward or in the front/rear direction and rip packaging such as garbage bags in which the processing material 2 is included, thereby starting the sorting and separation of the foreign matter 3, such as the packaging, and the waste material (mainly organic waste such as food waste) 4 included therein. Although the protrusions 35 used for crushing are attached to one end of the guide vanes (flow directing plates) 39 in the present embodiment, the protrusions 35 may be provided on both ends and may also be disposed at alternative positions inside the separation area 29 (as examples, between the guide vanes 39, on the inner surface of the barrel portion 26, or on the screen 60) so as to avoid collisions when the rotating vanes 10 rotate. The material to be processed 2 that has been partially crushed is sorted inside the separation area 29 by being agitated by the rotating vanes 10. Also, by becoming sandwiched between the front ends 11 of the rotating vanes 10 and the inner surface (inner wall) 25 of the barrel portion 26, between the front ends 11 of the rotating vanes 10 and the screen 60, and also between the front ends 11 of the rotating vanes 10 and the guide vanes 39, the processing material 2 that has been partially crushed is more efficiently sorted into the foreign matter 3, such as packaging, and the waste material 4 that was included in such packaging.

The sorted foreign matter 3 moves due to the centrifugal force of the rotating vanes 10 along the guide vanes 39 to the discharge outlet 22. On the other hand, due to being agitated by the rotating vanes 10, the separated material 4 that has been sorted from the foreign matter 3 turns into a slurry or sludge and is discharge via the perforated screen 60 to the storage tank 70. As shown in FIG. 1, the separating apparatus 100 may be equipped with the spraying apparatus 45 that supplies moisture to the separation area 29, so that when the moisture content included in the material to be processed 2 is low, water is supplied to the separation area 29 to promote the production of a slurry.

As shown in FIG. 5, the rotating vanes 10 include the rotational shaft 19 that is rectangular in cross section, a plurality of plates 18 that are respectively attached to side ends (side edges) in the direction of rotation of edges 19a of the rotational shaft 19 so as to be substantially perpendicular to the edges 19a, pressing portions 17 where the front ends 11 of the plurality of plates extend backward with respect to the direction of rotation in substantially an L shape so as to cause the material to be processed 2 to become sandwiched and deformed against at least part of the inner wall 25 of the housing 20, and a plurality of ribs 15 that connect the pressing portions 17 of the plates 18 and the edges 19a of the rotational shaft 19 along rear surfaces (back surfaces) 18b with respect to the direction of rotation of the plates 18. The plurality of ribs 15 are disposed at intervals along the rotational shaft 19.

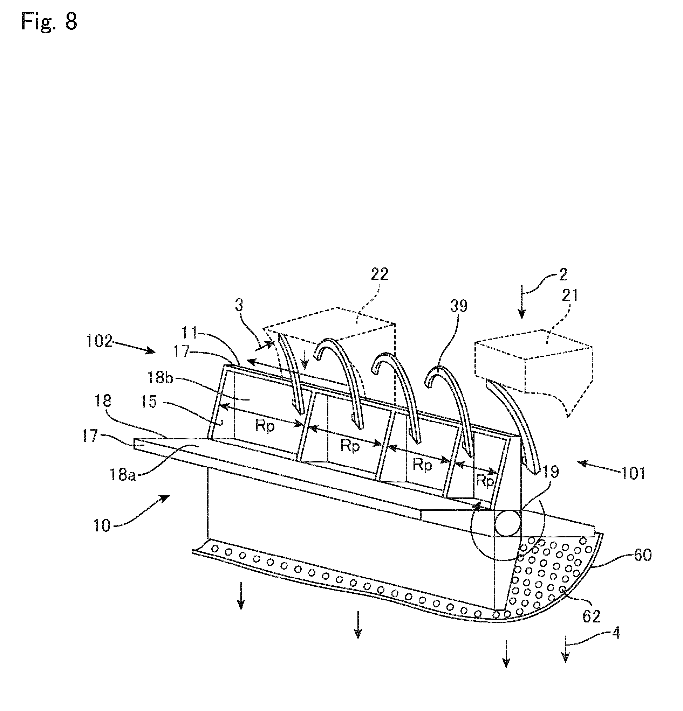

FIG. 8 extracts and shows the overall construction of the rotating vanes (rotating blades, rotating plates) 10. The rotating vanes 10 include four plates (blades) 18 that are fundamentally disposed with a 90° pitch so as to have rotational symmetry. The front end 11 of each plate 18 forms the pressing portion 17 that is bent backward in an L shape, and ribs 15 that extend from the rotational shaft 19 to the pressing portion 17 are attached to the rear surface 18b of each plate 18. The width of the pressing portion 17 is shorter than each edge 19a of the rotational shaft 19, and the ribs 15 have a trapezoidal shape that is close to a triangle with their bottom ends contacting (being welded to) an edge 19a with the same length as such edge 19a and their top ends contacting (being welded to) the pressing portion 17 with the same length as the length in the width direction of the pressing portion 17. Accordingly, the cross section of a rotating vane 10 including the ribs 15 is rectangular trapezoidal and close to a right-angled triangle. The pitch (interval) of the ribs 15 is shorter on the input side 101 than on the discharge side 102. For example, the pitch Rp on the inlet side 101 is 100 to 150mm and the pitch Rp on the discharge side 102 is 300 to 350mm, so that the pitch Rp on the discharge side 102 is around double the pitch Rp on the inlet side 101.

By making the pitch Rp on the inlet side 101 narrower, it is possible to suppress deformation of the plates 18 and the pressing portions 17 on the inlet side 101 where the load is great, to prevent vibration and noise, and to enable rotation of the rotating vanes 10 at high speed. Also, by making the pitch Rp on the discharge side 102 wider, it is possible to reduce the moment of inertia of the rotating vanes 10 and to reduce the driving torque of the rotating vanes 10.

By providing the respective blades (plates) 18 with the ribs 15 that extend on the rear surfaces 18b from the rotational shaft 19 to the pressing portions 17 at the front ends 11, it is possible to prevent bending and distortion of the front surfaces 18a. Accordingly, when the material to be processed 2 is pulled in from the inlet 21 and the material to be processed 2 is agitated by the front surfaces 18a of the blades 18 that face forward in the direction of rotation, vibration produced when the resistance provided by the material to be processed 2 fluctuates is reduced, which makes it possible to rotate the rotating vanes 10 at high speed.

Also, since the pressing portions 17 extend backward with respect to the direction of rotation (i.e., in the opposite direction to the direction of rotation) and the ribs 15 are also provided on the rear surfaces 18b of the blades 18, it is hard for the foreign matter 3 to be caught by blades 18, which makes is possible to prevent the foreign matter 3 causing resistance and generating vibration in the rotating vanes 10. Since the pressing portions 17 are also reinforced by the ribs 15, deformation of the pressing portions 17 can be suppressed in the same way as for the plates 18, even when destruction and crushing of the processing material 2 is promoted by the processing material 2 becoming sandwiched and pressed between the pressing portions 17 and the inner wall 25 of the housing 20. Accordingly, it is possible to rotate the rotating vanes 10 in a stable state at high speed.

As to the housing 20 of the separating apparatus 100, the barrel portion 26 and the rotating vanes 10 are supported by the support plates 27 and 28 at both ends. Accordingly, it is possible to suppress distortion of the barrel portion 26 and to maintain certain clearance between various components such as the barrel portion 26 that constructs the separation area 29 and the guide vanes 39 that are attached to the barrel portion 26 and the rotating vanes 10 (the front ends 11 of the rotating vanes 10). Accordingly, the clearance between the pressing portions 17 at the front ends 11 of the rotating vanes 10 and the inner wall 25 of the barrel portion 26, the clearance between the pressing portions 17 and the guide vanes 39, and the clearance between the pressing portions 17 and the filter 60 provided with the perforations 62 can be reduced so as to promote crushing of the material to be processed 2, which makes it possible to promote conversion of the sorted organic waste material 4 into a slurry. The housing 20 of the separating apparatus 100, the rotating vanes 10, and many of the other main components can be formed with plates of steel, for example, stainless steel, and can be assembled by welding or the like. Some parts may use other materials such as synthetic resin or ceramics. This is also the case for the other apparatuses (units) included in the present system 1.

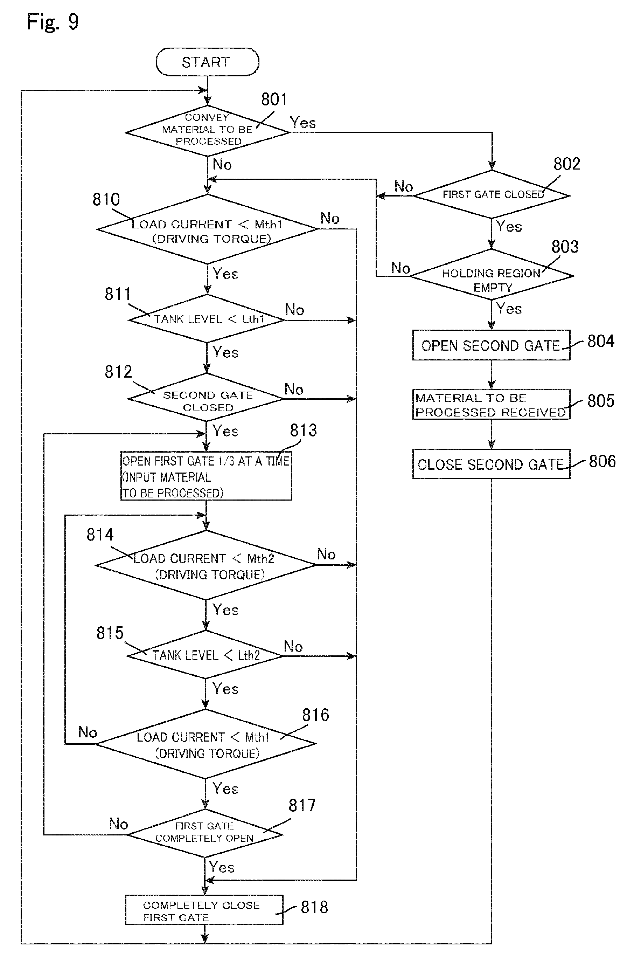

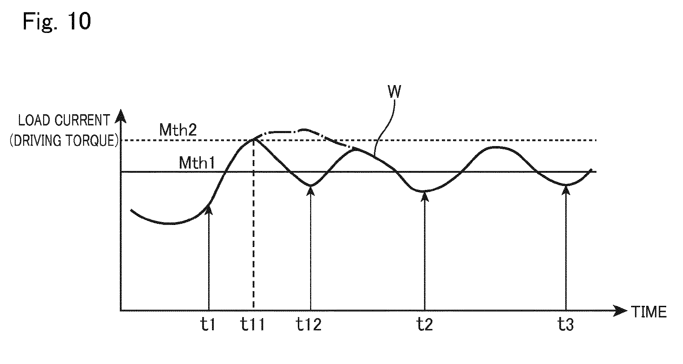

FIG. 9 shows, by way of a flowchart, an overview of a method of controlling the supplying unit 50 attached to the separating apparatus 100 using the gate control unit 730 of the control unit 700. Also, FIG. 10 shows changes in the driving torque of the rotating vanes 10 according to a load current W of the motor 40. With a DC motor or an inverter control motor used for variable speed driving, the load current is proportionate to the driving torque. Accordingly, in this example, the driving torque of the rotating vanes 10 is detected using the load current W of the driving motor 40. The driving torque of the rotating vanes 10 can be detected by various methods such as a phase difference method, a rotary torque detector that uses a strain gauge or the like, and the output of a torque convertor when a torque convertor is used.

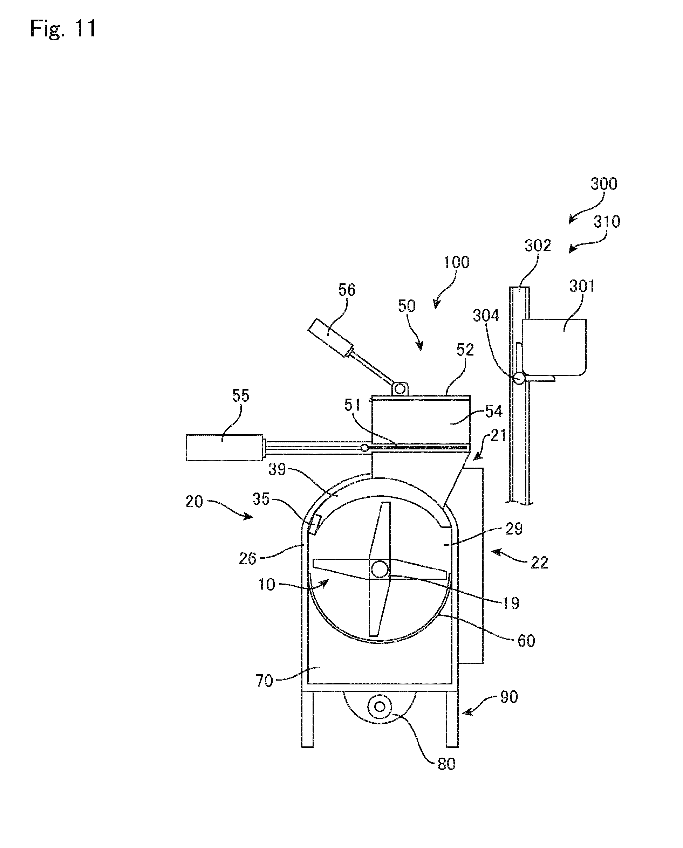

FIG. 11 schematically shows a state where preparations for the separating apparatus 100 receiving the material to be processed 2 have been carried out. Once the material to be processed 2 has been conveyed to the supplying unit 50 by the conveying apparatus 300 in step 801, the collaboration control unit 733 confirms in step 802 whether the first gate 51 on the inside is closed. If the first gate 51 is closed, once it is confirmed in step 803 that the holding region 54 is empty using an appropriate sensor, such as a weight sensor or an optical sensor, in step 804 the second gate control unit 732 operates the second actuator 56 to open the second gate 52 located outside. In step 805, the conveying control unit 710 outputs an instruction to the conveying apparatus 300 so that the material to be processed 2 is received by the holding region 54 of the supplying unit 50. Note that before step 801, it is also possible to provide a step of confirming whether the separating apparatus 100 is operating and to provide a step of automatically starting the separating apparatus 100 when a predetermined condition, such as whether the material to be processed 2 has arrived, if the separating apparatus 100 is not already operating.

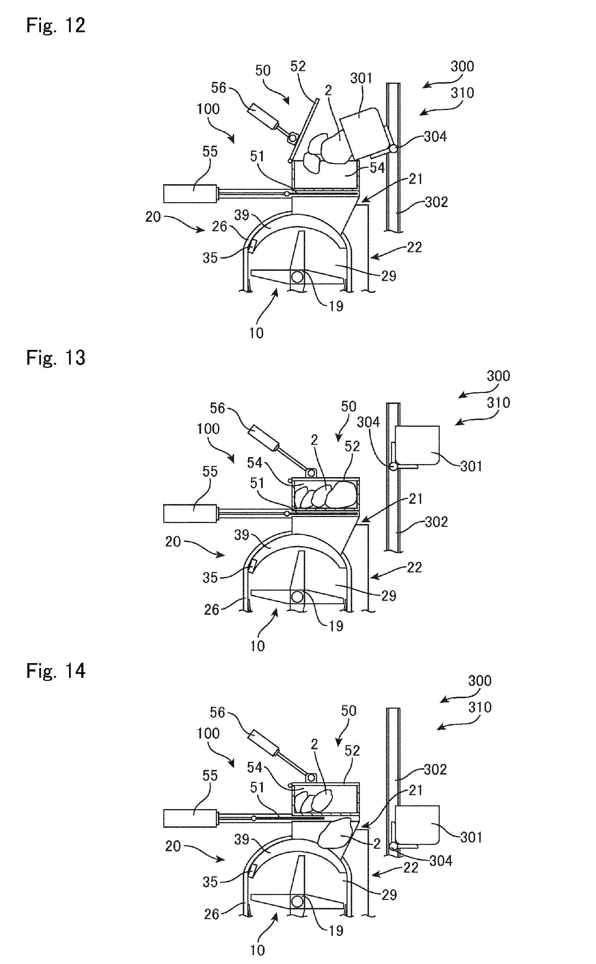

FIG. 12 schematically shows how the material to be processed 2 is received. The conveying apparatus 300 includes the inversion lift 310 and a rotary arm 304 rotates the waste container 301 to input the material to be processed 2 inside the waste container 301 into the supplying unit 50. When doing so, since the first gate 51 on the inside is closed, there is no discharging of the foreign matter 3 and others being sorted inside the separating apparatus 100 to the outside via the supplying unit 50.

When the loading (inputting) of material has ended, in step 806, the second gate control unit 732 operates the second actuator 56 to close the second gate 52 located outside. As shown in FIG. 13, the material to be processed 2 is received by the holding region (initial hopper) 54 between the first gate 51 and the second gate 52 of the supplying unit 50, the second gate 52 is closed, and preparations are made for inputting the material to be processed 2 from the supplying unit 50 into the housing 20 of the separating apparatus 100. In this process, if the first gate 51 is open in step 802 or the holding region 54 is not empty in step 803, there is no receiving of the material to be processed 2 in step 804 onwards.

In step 810, as shown in FIG. 10, if, at time t1, the load current W of the driving motor 40 of the rotating vanes 10 is at or below a first threshold Mth1, the material 2 can be loaded and separated in the separation area 29 of the housing 20. To do so, in step 811, the first gate control unit 731 confirms whether the level L1 of the storage tank 70 is at or below the first threshold Lth1, and in step 812 the collaboration control unit 733 confirms whether the second gate 52 is closed. If such conditions are confirmed, in step 813 the first gate control unit 731 operates the first actuator 55 to open the first gate 51 located inside by 1/3 at a time. The material to be processed 2 is supplied (inputted, loaded, introduced) into the separating apparatus 100 at the timing of time t1.

As shown in FIG. 14, by opening the first gate 51 by an intermediate degree of opening, the material to be processed 2 that is stored in advance in the holding region 54 is introduced into the separation area 29 of the housing 20. When the first gate 51 on the inside is partially open, since the second gate 52 on the outside is closed, the escape route for foreign matter 3 being separated in the separating apparatus 100, noise, foul smells and the like is closed by the second gate 52 on the outside, so that there will be no releasing of such matter, noise and smells to the outside via the supplying unit 50.

The first gate control unit 731 temporarily keeps the first gate 51 at the intermediate degree of opening, and during this time, the load current W and the level L1 of the storage tank 70 are monitored. If, in step 814, the load current W exceeds the second threshold Mth2, or in step 815, the tank level L1 exceeds the second threshold Lth2, in step 818 the first gate 51 is completely closed and the introducing of the material to be processed 2 is temporarily stopped.

If, at in time t11 in FIG. 10, the load current W exceeds the second threshold Mth2, the driving torque is high and it is determined that the load on the rotating vanes 10 is high, the first gate 51 is completely closed to stop the inputting of the material to be processed 2. Then, the processing returns to step 810 and if various conditions such as the load current W being at or below the first threshold Mth1 are satisfied, at the timing t12 the first gate 51 is opened once again to an intermediate degree of opening in step 813 to recommence input of the material to be processed 2. As shown by the broken line in FIG. 10, it is also possible to not set a second threshold Mth2 for the load current and, once the opening of the first gate 51 has started, to carry out control to maintain such intermediate degree of opening until the load current W has fallen to the first threshold Mth1.

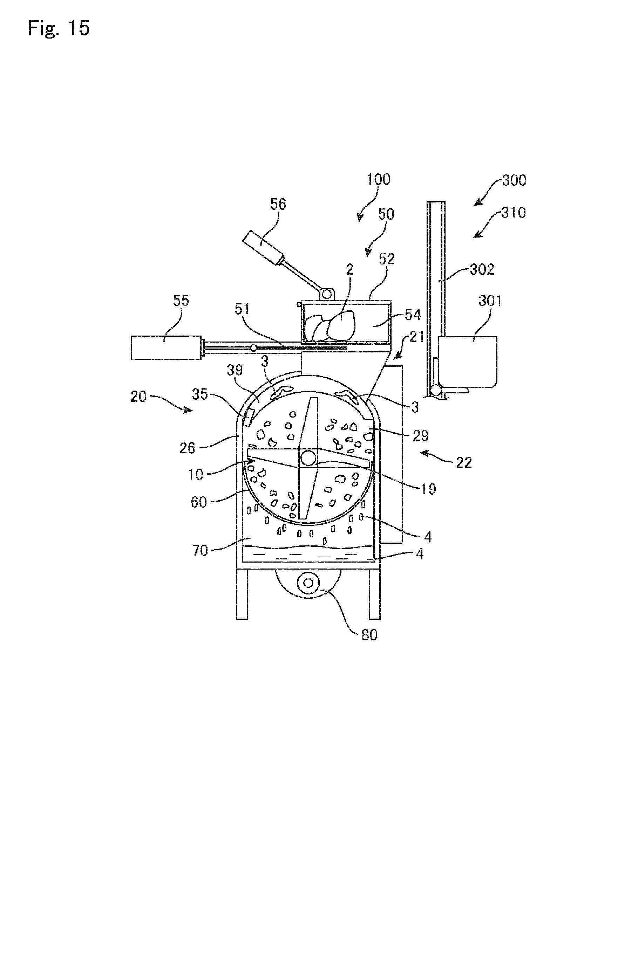

As shown in FIG. 15, the first gate 51 is set at an intermediate degree of opening in step 813, some of the processing material 2 held in the holding region 54 is inputted into the separation area 29, and sorting the foreign matter 3 and the separated material 4 proceeds. The separated material 4 that has been agitated and entered a fluidized state falls through the filter 60 and accumulates inside the storage tank 70. By doing so, the load on the rotating vanes 10 falls, and since the driving torque falls, the load current W also falls. Accordingly, in step 816 the first gate control unit 731 monitors whether the load current W has fallen to or below the first threshold Mth1. At time t2, if the load current W has become equal to or below the first threshold Mth1, in step 817 it is confirmed whether the first gate 51 is completely open, and if the first gate 51 can be opened further, the processing returns to step 813 and the first gate control unit 731 operates the first actuator 55 to increase the degree of opening of the first gate 51 (to 2/3 open). Since the degree of opening of the first gate 51 on the inside increases at the timing of time t2, some of the remaining material 2 stored in the holding region 54 go into the separating apparatus 100. In the present embodiment, the first gate 51 is controlled in three stages that are 1/3 open, 2/3 open, and completely open). The degree of opening of the first gate 51 may have two stages or four or more stages.

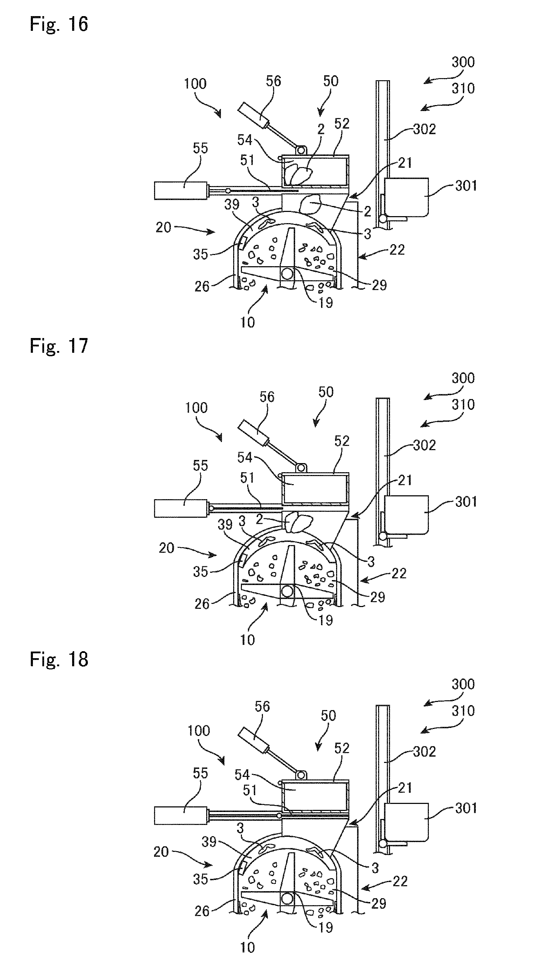

FIG. 16 shows a state where the degree of opening of the first gate 51 has been increased. By increasing the degree of opening of the first gate 51, the remaining material 2 held in the holding region 54 is fed into the separation area 29. As shown in FIG. 10, the load current W is at or below the first threshold Mth1 and the degree of opening of the first gate 51 is increased, the load current W will increase once again.

If the first gate 51 is maintained at 2/3 open and at time t3, in step 816 the load current W is at the first threshold Mth1 or below, the processing returns to step 813, the degree of opening of the first gate 51 is increased and the first gate 51 becomes completely open. Accordingly, at the time t3, as shown in FIG. 17, all the material 2 held in the holding region 54 is gone into the separation area 29 and separated.

If, in step 816, the load current W becomes at or below the first threshold Mth1 once again, since, in step 817, the first gate 51 is already completely open, in step 818 the first gate control unit 731 operates the first actuator 55 to completely close the first gate 51. By doing so, as shown in FIG. 18, the processing of the material 2 that has been received by the supplying unit 50 temporarily ends and the next conveying of the material to be processed 2 is awaited. Note that a step of automatically stopping the separating apparatus 100 if a state where the first gate 51 is completely closed and the material to be processed 2 has not been supplied to the holding region 54 of the supplying unit 50 has continued for a predetermined time may also be provided.

In the separating apparatus 100, the first and second gates 51 and 52 of the supplying unit 50 are operated by the gate control unit 730 of the control unit 700 and the timing for inputting the material 2 is controlled as shown by time t1, t11, t2, and t3 so as to limit the increase in the driving torque of the rotating vanes 10. It is possible to monitor the driving torque of the rotating vanes 10 using an appropriate method such as the load current W and possible to prevent the driving torque from becoming excessive. It is possible to prevent the rotation of the rotating vanes 10 from becoming unstable and to maintain high-speed rotation.

By controlling the input timing of the material 2 by the gate control unit 730, it is possible to control the amount of processing material 2 in a state where the material 2 is wrapped in packaging, which is acting as a load on the rotating vanes 10 in the separation area 29 inside the housing 20. Accordingly, it is possible to prevent the load on the rotating vanes 10 from becoming too high and to stably maintain the rotational speed of the rotating vanes 10. It is also possible to maintain the level L1 of the tank storing the separated material 4 at an appropriate level. This means that it is possible to provide the separating apparatus 100 that is capable of stably and efficiently separating the foreign matter 3. Since a large driving motor 40 capable of excessive torque becomes unnecessary, it is possible to provide the separating apparatus 100 at low cost and with low power consumption.

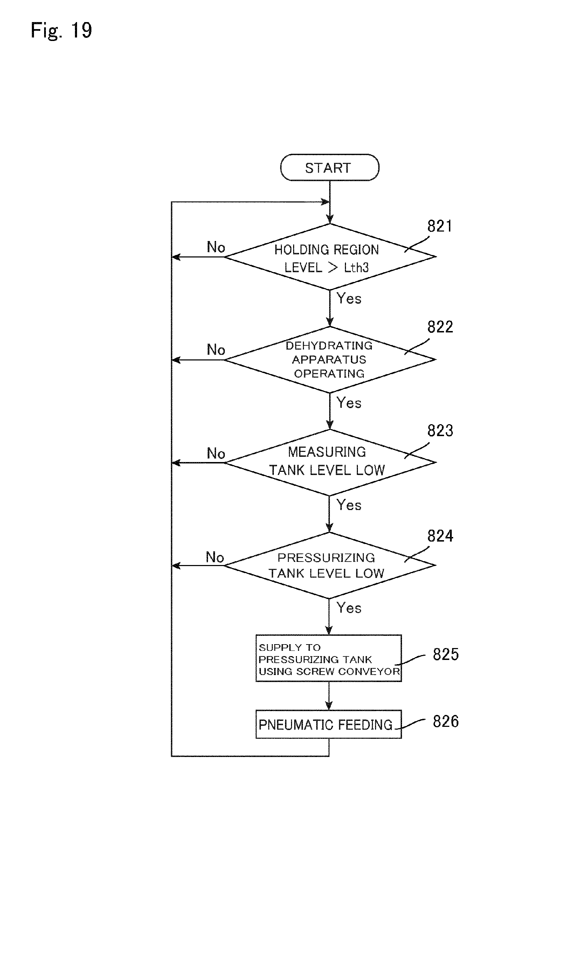

FIG. 19 is a flowchart showing a method of controlling the volumetric pneumatic transporting apparatus 400 using the pneumatic transporting control unit 740 of the control unit 700. If, in step 821, the level L1 of the separated material 4 in the storage tank 70 of the separating apparatus 100 is at or above a minimum level (a third threshold Lth3) for driving the screw conveyor 80, the pneumatic transporting control unit 740 confirms in step 822 that the dehydrating apparatus 200 is operating and, in step 823, checks if the level of the measuring tank 500 is low so that it is possible to receive the separated material 4. If such conditions are confirmed and it is also possible to check in step 824 that the pressurizing tank 401 of the volumetric pneumatic transporting apparatus 400 is empty, in step 825 the pneumatic transporting control unit 740 drives the screw conveyor 80 to supply the separated material 4 to the pressurizing tank 401.

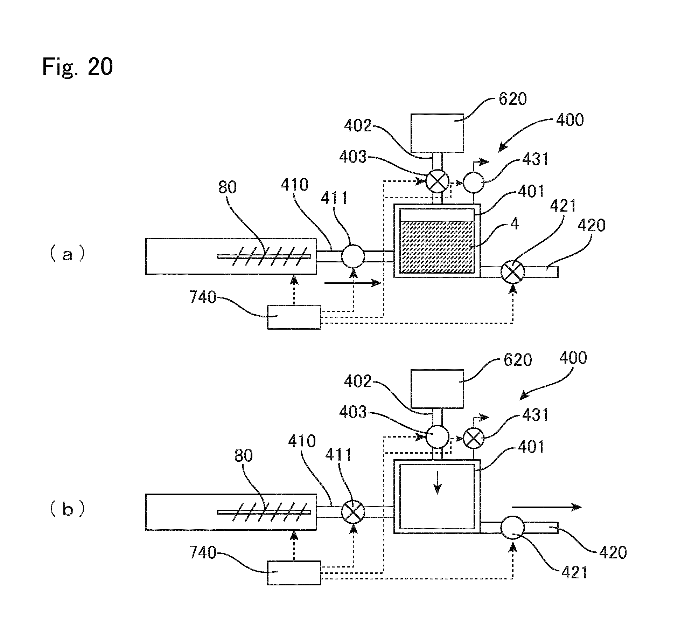

FIG. 20(a) shows a state where the separated material 4 is supplied to the pressurizing tank 401 of the volumetric pneumatic transporting apparatus 400. In addition to the pressurizing tank 401, the volumetric pneumatic transporting apparatus 400 includes a receiving line 410 that receives the separated material 4 from the screw conveyor 80, an automatic valve 411 that opens and closes the receiving line 410, a pressurizing line 402 that supplies compressed air from the compressor 620 to the pressurizing tank 401, an automatic valve 403 that opens and closes the pressurizing line 402, a supply line 420 that supplies the separated material 4 from the pressurizing tank 401 to the measuring tank 500, an automatic valve 421 that opens and closes the supply line 420, and a vent valve 431 for the pressurizing tank 401. The vent valve 431 is connected to the deodorizing apparatus 670.

In step 825, the pneumatic transporting control unit 740 opens the automatic valve 411 of the receiving line 410, closes an automatic valve 403 of the pressurizing line 402, closes the automatic valve 421 of the supply line 420, opens the vent valve 431, and drives the screw conveyor 80 so that the separated material 4 is received in the pressurizing tank 401.

Once the pressurizing tank 401 has become full, in step 826 the pneumatic transporting control unit 740 pumps the separated material 4 in the pressurizing tank 401 to the measuring tank 500. Once the measuring tank 500 has become full and the dehydrating process at the dehydrating apparatus 200 has ended, the separated material 4 supplied to and stored in the measuring tank 500 is fed from the measuring tank 500 to the dehydrating apparatus 200 and is subjected to the dehydrating process.

FIG. 20(b) shows a state where the separated material 4 from the pressurizing tank 401 of the volumetric pneumatic transporting apparatus 400 is pumped to the measuring tank 500. The pneumatic transporting control unit 740 closes the automatic valve 411 of the receiving line 410, opens the automatic valve 403 of the pressurizing line 402, opens the automatic valve 421 of the supply line 420, closes the vent valve 431, and applies pressure to the pressurizing tank 401 using compressed air to pump a fixed amount of the separated material 4 measured at the pressurizing tank 401 to the measuring tank 500.

Since a fixed amount of the separated material 4 is pumped from the separating apparatus 100 to the measuring tank 500 by the volumetric pneumatic transporting apparatus 400, it is possible to easily control the amount held in the measuring tank 500. Also, when the measuring tank 500 is full and the separated material 4 is no longer pumped from the volumetric pneumatic transporting apparatus 400, the level L1 of the storage tank 70 of the separating apparatus 100 rises and if the predetermined threshold Lth2 is exceeded, input of the processing material 2 from the supplying unit 50 is stopped to control the level L1 of the storage tank 70.

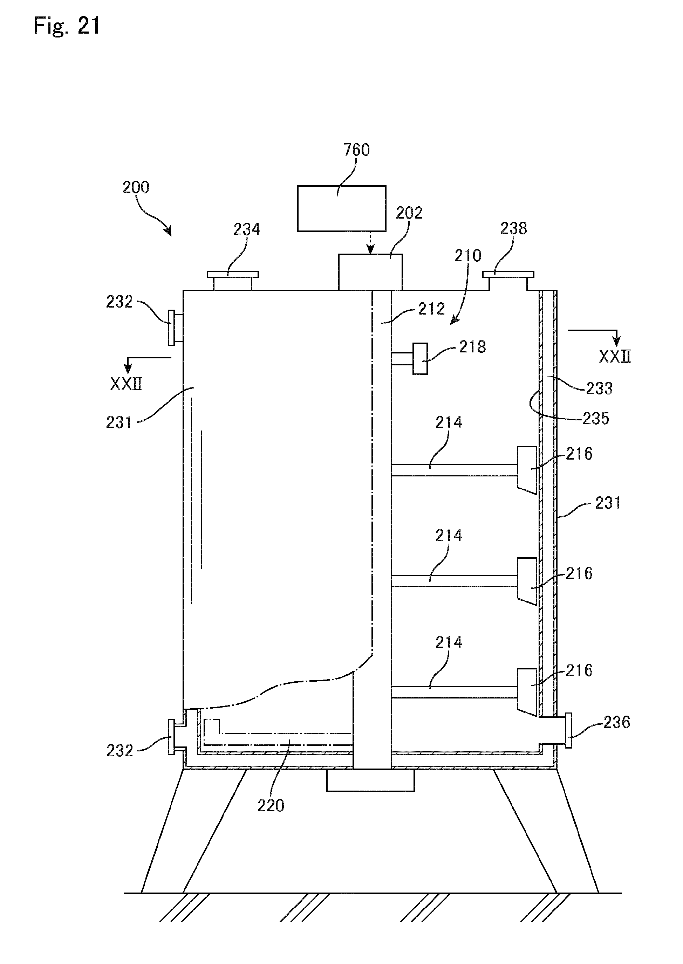

FIG. 21 is a side view showing the side surface of the dehydrating apparatus 200 in a state where part of a side wall 231 has been cut. The dehydrating apparatus 200 as a whole is a cylindrical tank and has the agitating unit 210 installed inside. The agitating unit 210 includes a rotational shaft 212 provided in the center of the dehydrating apparatus 200 and a number of arms 214 that are fixed to the rotational shaft 212 and extend in the horizontal direction. Agitating vanes 216 are attached to the front ends of the respective arms 214. The rotational shaft 212 is rotationally driven by the driving motor 202 via the dehydrating control unit 760 of the control unit 700. Airflow producing vanes 218 are attached to the upper portion of the rotational shaft 212 and scrapers 220 are attached to the lowest part.

The outer wall 231 of the dehydrating apparatus 200 is a jacket with a double-wall construction so that a steam path 233 that circulates steam along the outer wall 231 is formed. Accordingly, it is possible to indirectly heat the inside of the dehydrating apparatus 200 using steam. When the agitating motor 202 is rotationally driven, steam is supplied from a heating medium circulation opening 232 to the steam path 233 of the cylindrical side wall 231 to heat the inside of the dehydrating apparatus 200. When, in this state, the separated material 4 in the form of a slurry is supplied via the measuring tank 500 from an inlet 234, the separated material 4 inside the dehydrating apparatus 200 is agitated by agitating vanes 216. Although the separated material 4 forms mud-like lumps when heated and agitated, such lumps are broken up by the agitating vanes 216 to produce a dried powder. After dehydrating, the separated material 4 is discharged from a discharge outlet 236 by a scraper 220. When material to be processed with a high moisture content is heated, steam will be discharged from a steam discharge outlet 238 and as described with reference to FIG. 1, such steam is processed by the condenser apparatus 650.

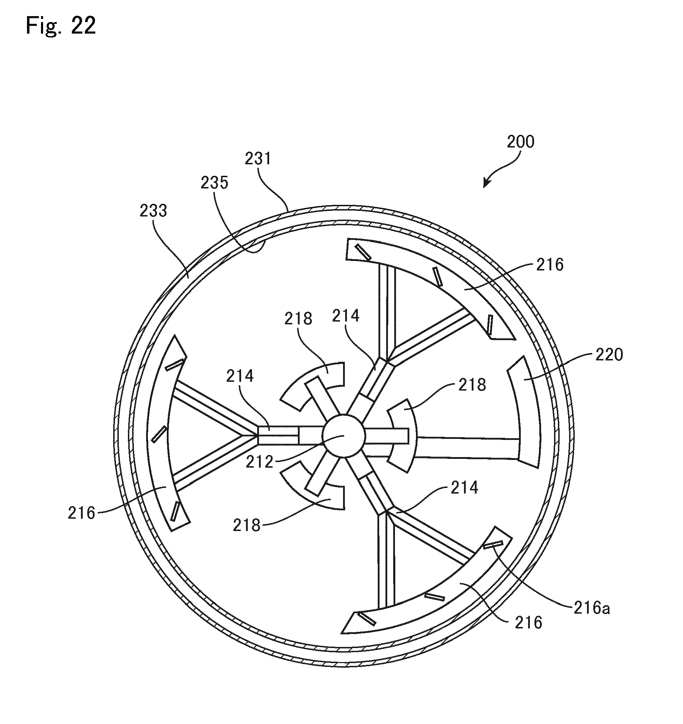

FIG. 22 is a cross-sectional view in the horizontal direction of the dehydrating apparatus 200 and shows the overall construction of the inside of the dehydrating apparatus 200. As shown in the drawing, the agitating vanes 216 are constructed of arc-shaped steel plates and are fixed to the front ends of rigid arms 214 that are welded to the rotational shaft 212. The agitating vanes 216 function so as to scrape away the separated material 4 that adheres to an inner portion (inner surface, inner wall) 235 of the side wall 231 of the dehydrating apparatus 200 during the dehydrating process and to agitate and crush the separated material 4. A number of protrusions 216a are attached to the agitating vanes 216, which are effective in crushing the separated material 4 that has been dried and become formed into balls. The airflow producing vanes 218 provided at the upper portion of the rotational shaft 212 function so as to agitate the air inside the dehydrating apparatus 200 and increase the dehydrating speed. The applicant of the present invention has disclosed one example of a control system and a control method for a dehydrating apparatus in Japanese Laid-Open Patent Publication No. 2006-17315 (Japanese Patent No. 4,162,632).

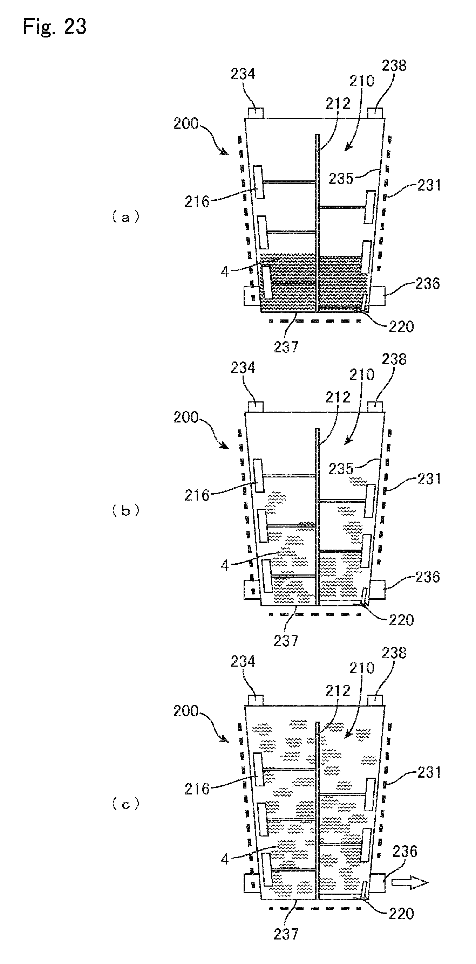

FIG. 23 schematically shows the operation of the dehydrating apparatus 200. As shown in FIG. 23(a), the separated material 4 that has been inputted from the inlet 234 is initially in a mud-like form and gathers on a floor 237 part of the dehydrating apparatus 200. When the rotational shaft 212 is rotationally driven and the side wall 231 and/or floor portion 237 of the apparatus 200 are heated, the separated material 4 is agitated and becomes mud-like.

As shown in FIG. 23(b), the separated material 4 becomes semi-dry, the volume decreases, and with it the load on the agitating unit 210 increases. Accordingly, the agitating unit 210 is switched from rotational speed control to torque control (load current control). Although dried or semi-dried separated material 4 will adhere to the inner wall 235 of the apparatus as the dehydrating proceeds, such separated material 4 is scraped off by the agitating vanes 216 to form small lumps that float up inside the dehydrating apparatus 200.

The above process is repeated, the separated material 4 is dried to form a powder, and as shown in FIG. 23(c), the dried separated material 4 becomes widely spread out in the up-down direction inside the dehydrating apparatus 200. The scraper 220 is keep rotating and the dried separated material 4 that has gathered on the floor 237 of the dehydrating apparatus 200 is discharged from the discharge outlet 236. If the scraper 220 continues to rotate while the rotational shaft 212 is being rotationally driven, the dried separated material 4 that has fallen on the floor can be completely discharged from the discharge outlet 236 via the screw feeder 605 to the stockyard 600. By doing so, it is possible to recycle and reuse the separated organic waste material, such as food residue, as feed or compost.

Although the present invention has been described above with the processing system 1 including the separating apparatus 100, the volumetric pneumatic transporting apparatus 400, the dehydrating apparatus 200, and the like as an example, the processing system 1 may be a system that includes the separating apparatus 100 but does not include the volumetric pneumatic transporting apparatus 400, the dehydrating apparatus 200, or the like. The processing system 1 may also include a defatting apparatus or the like, and may include an apparatus that further processes the material (recycled material) 5 generated by the dehydrating apparatus 200 as appropriate for a variety of applications. In addition, although the rotating vanes 10 of the separating apparatus 100 rotate in the clockwise direction when looking from the introduction side in the above description, the rotating vanes 10 may be rotated in the anticlockwise direction. Also, although a number of numeric values have been given as examples, the present invention is not limited to such values and may be modified within the scope defined by the patent claims.

## Claims

1. A system comprising a separating unit that separates foreign matter including packaging from material to be processed, the separating unit including:
rotating vanes that agitate the material to be processed in an up-down direction inside a housing;
an inlet that passes into the housing;
a discharge outlet that discharges the foreign matter from inside the housing;
a driving unit that rotationally drives the rotating vanes;
a supplying unit that supplies the material to be processed into the housing via the inlet; and
a control unit that controls the timing of inputting of the material to be processed into the housing by the supplying unit so as to limit an increase in driving torque of the rotating vanes.

2. The system according to claim 1,
wherein the supplying unit includes a first gate that opens and closes the inlet, and
the control unit includes a function of controlling a degree of opening of the first gate, based on the driving torque of the rotating vanes when the first gate is at an intermediate degree of opening.

3. The system according to claim 2,
wherein the control unit includes a function of temporarily stopping the first gate at an intermediate degree of opening.

4. The system according to claim 2 or claim 3,
wherein the supplying unit includes a second gate which together with the first gate forms a holding region for the material to be processed, and
the control unit includes a function of controlling the first gate and the second gate to produce a state where at least one of the first gate and the second gate is closed.

5. The system according to any of claim 1 to claim 4,
further comprising:
a first tank that stores a fluidized material separated from the material to be processed by the separating unit; and
a pneumatic feeding unit that intermittently pneumatically transports the fluidized material from the first tank via a pressurizing tank,
wherein the control unit includes a function of controlling timing of inputting of the material to be processed into the housing so as to limit an increase in a level of the first tank.

6. The system according to any of claim 1 to claim 5,
wherein the rotating vanes include:
a plurality of blades that are respectively attached to ends in a direction of rotation of edges of a rotational shaft that has a polygonal cross section, so as to be substantially perpendicular to respective edges;
pressing portions where front ends of the plurality of blades extend backward to the direction of rotation in substantially an L shape and sandwich the material to be processed against at least part of an inner wall of the housing to cause deformation of the material to be processed; and
a plurality of ribs that connect the pressing portions of respective blades and the edges of the rotational shaft along rear surfaces of respective blades to the direction of rotation, the ribs being disposed at intervals along the rotational shaft.

7. The system according to claim 6,
wherein the intervals of the plurality of ribs are narrower on an inlet side than on a discharge side.

8. The system according to any of claim 1 to claim 7,
wherein a first opening of the housing that is connected to the discharge outlet includes an opening that extends from a position that corresponds to upper ends of the rotating vanes to below the rotational shaft.

9. The system according to any of claim 1 to claim 8,
wherein the housing includes support plates at both ends and a barrel portion that is supported on the support plates at both ends, and the support plates at both ends rotatably support the rotational shaft of the rotating vanes.

10. The system according to claim 9,
wherein the separating unit includes a perforated member that is disposed along a lower side of a rotation region where the rotating vanes rotate, the perforated member selectively allowing the fluidized material to pass through, and
the barrel portion includes a second opening that opens and closes and has a size that enables at least part of the perforated member to be replaced.

11. The system according to any of claim 1 to claim 10,
further comprising a dehydrating unit that carries out a process of heating and dehydrating the fluidized material with agitating, the fluidized material being separated from the material to be processed by the separating unit.

12. A control method of a system that includes a separating unit that separates and discharges foreign matter including packaging from material to be processed, the separating unit including:
rotating vanes that agitate the material to be processed in an up-down direction inside a housing;
an inlet that passes into the housing; and
a driving unit that rotationally drives the rotating vanes, and
the control method comprising controlling a timing of inputting of the material to be processed into the housing so as to limit an increase in driving torque of the rotating vanes.

13. The control method according to claim 12,
wherein the separating unit includes a first gate that opens and closes the inlet, and controlling the timing includes controlling a degree of opening of the first gate, based on the driving torque of the rotating vanes when the first gate is at an intermediate degree of opening.

14. The control method according to claim 13,
wherein the separating unit includes a second gate which together with the first gate forms a holding region for the material to be processed, and
the control method further includes controlling the first gate and the second gate to produce a state where at least one of the first gate and the second gate is closed.

15. The control method according to any of claim 12 to claim 14,
wherein the system includes:
a first tank that stores a fluidized material separated from the material to be processed by the separating unit; and
a pneumatic feeding unit that intermittently pneumatically transports the fluidized material from the first tank via a pressurizing tank, and
the control method further comprises controlling timing of inputting of the material to be processed into the housing so as to limit an increase in a level of the first tank.
